# EUROPÄISCHE PATENTSCHRIFT

(11) **EP 0 481 301 B1**
(45) Veröffentlichungstag und Bekanntmachung des Hinweises auf die Patenterteilung: **03.05.1995**
(21) Anmeldenummer: 91116933.2
(22) Anmeldetag: 04.10.1991
(51) Int. Cl.: B65B 1/32, G01G 13/02, G01G 23/01

(54) **Bruttowaage vom waagebalkenfreien Typ**
Gross weighing apparatus without beams
Appareil de pesage sans fléaus

(30) Priorität: 15.10.1990 DE 4032653
(43) Veröffentlichungstag der Anmeldung: 22.04.1992
(73) Patentinhaber: Greif-Werk Maschinenfabrik GmbH, D-23560 Lübeck (DE)
(72) Erfinder: Thiele, Jörgen, Dipl.-Ing., D-23566 Lübeck (DE); Rasmussen, Harry-Dieter, D-23569 Lübeck (DE); Haase, Karl Heinz, Dr. Dr.-Ing., D-04277 Leipzig (DE)
(74) Vertreter: Wilcken, Thomas, Dipl.-Ing.

(56) Entgegenhaltungen:
- WO-A-86/00594
- GB-A- 2 154 975
- US-A- 4 703 782

## Beschreibung

Die Erfindung geht aus von einer Bruttowaage vom waagebalkenfreien Typ für schüttfähiges oder fließfähiges Füllgut, mit einem Einfüllbehälter für das mittels mehrerer, elektromagnetischer Wägezellen abzuwiegende Füllgut, einem dem Einfüllbehälter nachgeordneten Füllstutzen, an dem ein das Füllgut aufnehmendes Verpackungsmittel anklemmbar ist, und einer rechnergestützten Einrichtung zur Feststellung von insbesondere Gewichtsabweichungen (z.B. US-A-4 703 782).

Bruttowaagen dieser Art sind in der Praxis in Gebrauch. Bei ihnen ist der Einfüllbehälter mit dem sich daran unten anschließenden Füllstutzen mit einer die Wägezellen aufweisenden Wägevorrichtung mechanisch fest verbunden. Das mit dem zu füllenden Verpackungsmittel, in der Regel ein sogenannter Offensack, ist für den Füllvorgang an dem Füllstutzen angeklemmt. Diese Waagen haben zwar einen kompakten Aufbau, weisen aber keine Verdichtungseinrichtung auf, da sie nur für solche Füllgüter einsetzbar sind, die nicht verdichtet zu werden brauchen oder nicht verdichtet werden sollen. Sie haben daher einen begrenzten Einsatzbereich. Auch ist es bei diesen Waagen nicht möglich, auf schnelle und einfache Weise eine Überprüfung ihrer Wägegenauigkeit vorzunehmen.

Die Aufgabe der Erfindung besteht in der Verbesserung einer Bruttowaage der einleitend angeführten Art dahingehend, daß ihre Wägegenauigkeit schnell und einfach festgestellt werden können soll, ferner soll sie bei kompaktem Aufbau eine Verdichtung des abgepackten Füllgutes des noch am Füllstutzen hängenden Verpackungsmittels ohne Schädigungsgefahr für die Wägezellen der Wägevorrichtung gestatte.

Diese Aufgabe wird durch die Merkmale des Patentanspruchs 1 gelöst.

Durch die erfindungsgemäße Lösung ist die Bruttowaage zu einer Bruttopackwaage weiterentwickelt. Sie ist einfach und kompakt im Aufbau, und es werden die Wägezellen während des Verdichtungsvorganges geschont, da diese dabei nicht den Belastungen des gefüllten Verpackungsmittels und den Verdichtungsvorgängen der Verdichtungseinrichtung ausgesetzt sind, und zwar aufgrund der mechanischen Entkoppelung des Füllstutzens von der Wägevorrichtung. Hierzu wird der Füllstutzen angehoben, so daß die Wägezellen nach Füllen des Verpackungsmittels vollständig entlastet sind, und das Füllgut kann dann im Offenensack verdichtet werden. Des weiteren bietet sich auf einfache Weise der weitere Vorteil, daß nach jedem Füllvorgang schnell und einfach eine Nachprüfung der Kalibrierung (Eichung) der Waage vorgenommen werden kann, um festzustellen, ob beispielsweise die gemessene Gewichtsabweichung der gerade abgefüllten Füllgutmenge noch innerhalb der zulässigen Toleranz liegt.

Zwar sind sogenannte Nettopackwaagen bekannt, die eine Verdichtungseinrichtung für das abgefüllte Füllgut aufweisen. Bei diesen Waagen besteht die Gefahr der Schädigung der Wägezellen aber nicht, jedoch sind sie voluminös und platzraubend aufgebaut, so daß sie bei ihrer Aufstellung relativ viel Platz beanspruchen.

Ein einfacher Aufbau der Entkopplungseinrichtung besteht darin, daß die Einrichtung wenigstens zwei Einheiten aus je einer Entkopplungsstange und einem diese Stange auf- und abwärts bewegenden Antrieb aufweist, wobei jede Entkopplungsstange an ihrem Unterende ein Mitnehmerelement für den Füllstutzen aufweist und wobei der den oberen Endbereich jeder Entkopplungsstange erfassende Antrieb am Einfüllbehälter montiert ist. Ein einfacher Aufbau der Gehängeeinrichtung besteht aus mehreren, jeweils den Wägezellen zugeordneten Gehängeeinheiten, wobei jede Einheit eine mit ihrem Oberende an der zugehörigen Wägezelle befestigten Tragstange mit einem Tragkörper an ihrem Unterende aufweist, auf dem sich der Füllstutzen lose hängend abstützt.

In vorteilhafter Weitergestaltung der erfindungsgemäßen Waage kann sich an der Gehängeeinrichtung oberhalb des Füllstutzens zusätzlich ein der Füllgutmenge entsprechendes, vorzugsweise Ringform aufweisendes Eichgewicht lose abstützen, wodurch dieses Eichgewicht platzsparend angeordnet ist.

Zur Feststellung des Urnullpunktes der Wägezellen kann die Tragstange jeder Gehängeeinheit einen weiteren Tragkörper zur losen Abstützung und Abhebung des ringförmigen Eichgewichtes aufweisen, wobei sich der weitere Tragkörper mit Abstand oberhalb des ersten Tragkörpers der Tragstange befindet.

Die Erfindung ist nachstehend anhand eines in den anliegenden Zeichnungen dargestellten Ausführungsbeispieles näher erläutert. Es zeigen:
- Figur 1: in Seitenansicht den erfindungsgemäß gestalteten Bereich der nur teilweise dargestellten Waage,
- Figuren 2, 3 und 4: die Einzelheit X in Figur 1 in beispielsweiser Ausgestaltung und in verschiedenen Betriebszuständen.

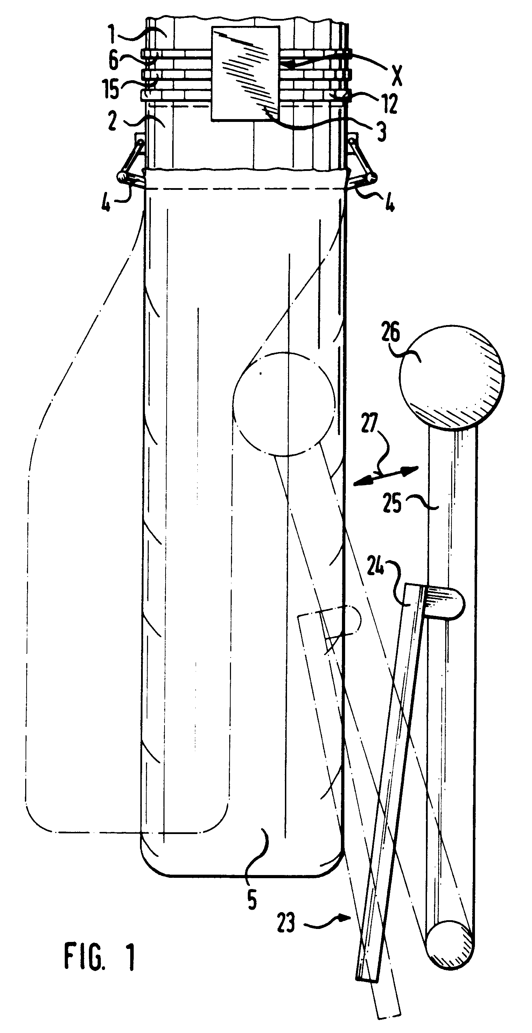

Die Figur 1 zeigt nur den für das Verständnis der erfindungsgemäßen Ausgestaltung erforderlichen Bereich der dosierenden Bruttowaage. So ist also die dosierende Apparatur einschließlich des Gestells der Waage und eine rechnergestützte Einrichtung zur Auswertung von Meßwerten nicht dargestellt. Lediglich der von der dosierenden Apparatur abgehende Einfüllbehälter ist in Figur 1 teilweise angedeutet und mit 1 bezeichnet. Dem Einfüllbehälter 1 ist ein Füllstutzen 2 nachgeordnet, und zwar als davon räumlich getrennte Baueinheit, der bzw. die lediglich über mehrere, allgemein mit 3 bezeichnete Anordnungen in Verbindung miteinander stehen , wie noch im einzelnen erläutert ist. Das Unterende des Füllstutzens 2 der Waage ist in üblicher Weise mit einer Anklemmeinrichtung 4 ausgerüstet, um einen mit einer vorbestimmten Menge an schüttfähigem oder fließfähigem Füllgut zu füllenden Offensack 5 am Füllstutzen vorübergehend festzuhalten. Je nach Baugröße des Einfüllbehälters 1 und des Füllstutzens 2 sind zwei oder mehr Anordnungen 3 vorgesehen.

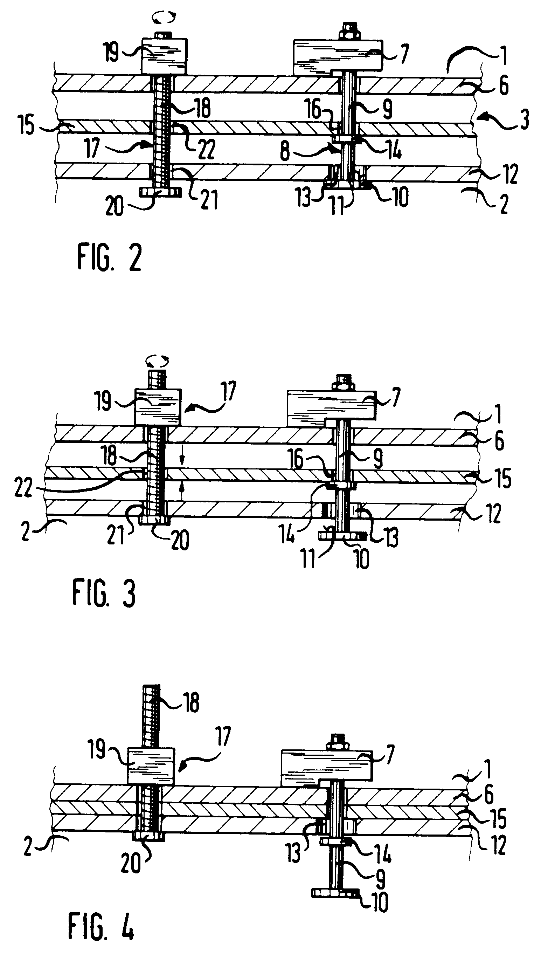

In den Figuren 2, 3 und 4 ist der Aufbau der Anordnung 4 im einzelnen gezeigt.

Der Einfüllbehälter 1 ist an seinem Unterende mit einem Ringflansch 6 versehen, der entsprechend der Anordnungen 3 mit gleichvielen Wägezellen 7 versehen ist. Über eine allgemein mit 8 bezeichnete Gehängeeinrichtung ist der Füllstutzen 2 mit den Wägezellen 7 verbunden. Jeder Wägezelle 7 ist eine Gehängeeinheit zugeordnet, wobei jede Einheit eine Tragstange 9 umfaßt, die an ihrem Oberende mit der Wägezelle mechanisch verbunden ist und an ihrem Unterende eine Auflageplatte 10 aufweist, deren Oberseite eine Tragschulter 11 bildet, auf welcher sich der Füllstutzen 2 lose abstützt. Hierzu weist der Füllstutzen 2 einen Ringflansch 12 auf, der mit Löchern 13 versehen ist, durch welche sich die jeweilige Tragstange 9 hindurcherstreckt Der Ringflansch 12 liegt mit seinem an die Löcher 13 angrenzenden Randbereich auf der Schulter 11 der Platte 10 lose auf.

Mit Abstand zu der Auflageplatte 10 ist oberhalb des Füllstutzens 2 ein Auflagekörper 14 befestigt, auf welchem ein auswechselbares Eichgewicht 15 lose aufliegt, das der jeweils abzufüllenden Füllgutmenge entspricht. Im dargestellten Fall ist das Eichgewicht 15 ebenfalls mit Löchern 16 versehen, durch welche sich die betreffenden Tragstangen 9 hindurcherstrecken. Des weiteren sind die Löcher 13 in dem Flansch 12 des Füllstutzens 2 von solchem Durchmesser, daß sich die Auflagekörper 14 durch die Löcher 13 hindurchbewegen können, wenn der Füllstutzen 2 nach oben angehoben wird, wie noch erläutert ist. Das Eichgewicht 15 ist vorzugsweise als Ring ausgebildet, der das Unterende des Einfüllbehälters 1 umgibt, welches Unterende berührungsfrei in das Oberende des Füllstutzens 2 hineinragt, wie Figur 1 zeigt.

Jede Anordnung 3 umfaßt im gezeigten Fall auch eine Entkopplungseinrichtung 17, um den Füllstutzen 2 mit dem daran hängenden Sack 5 von den Wägezellen 7 vollständig zu entlasten. Jede Einrichtung 17 besteht aus einer Entkopplungsstange 18, beispielsweise eine Gewindestange, und aus einem Antrieb 19, der die Stange 18 aufwärts und abwärts bewegt, um dadurch zwecks Entlastung der Wägezellen 7 den Füllstutzen 2 zusammen mit dem daran hängenden Sack 5 anzuheben. Hierzu ist jede Stange 18 an ihrem Unterende mit einem Mitnehmerelement 20 versehen, das die Schulter 12 des Füllstutzens 2 hintergreift, wobei sich die Stange 18 durch ein Loch 21 des Flansches 12 hindurcherstreckt. Des weiteren erstreckt sich die Stange 18 auch durch ein Loch 22 des Eichgewichtes 15. Jedoch können die Löcher 22 auch entfallen und stadtdessen kann das Eichgewicht zwecks Umgehung der Stange 18 anders ausgebildet sein. Das gleiche gilt auch für das Loch 21 des Flansches 12; auch hier kann das Erfassen des Flansches 12 und damit das Anheben des Füllstutzens 2 unter Wegfall des Loches 21 anders konstruiert sein. Der Antrieb 19 kann beispielsweise aus einem elektrischen Getriebemotor in Form eines Stellmotors bestehen.

Sollten abhängig von der Baugröße der Bruttowaage mehr als zwei elektromagnetische Wägezellen 7 umfangsmäßig auf dem Flansch 6 des Übergabebehälters 1 montiert und damit auch mehr als zwei Gehängeeinheiten vorhanden sein, so kann es ausreichen, daß dann nur zwei Entkopplungseinheiten vorgesehen sind, um zu gewährleisten, daß der Füllstutzen 2 zusammen mit dem Sack 5 gleichmäßig angehoben wird.

Dem Füllstutzen 2 ist eine Verdichtungseinrichtung 23 nachgeordnet, die mit dem am Stutzen 2 hängenden Offensack 5 zusammenwirkt. Die schematisch in Figur 1 in Seitenansicht gezeigte Einrichtung 23 ist ein sogenannter Konusrollenpacker bekannter Bauart und daher nur knapp erläutert. Er weist einen Flächenkörper 24 und zwei an einem Rahmen 25 oben befestigte Konusrollen 26 auf. Der Körper 24 kann ebenfalls mit dem Rahmen 25 verbunden sein. Die Verdichtungseinrichtung 23 ist gemäß dem Doppelpfeil 27 antreibbar, um die Verdichtungsarbeit zu leisten. Es können auch andere Verdichtungseinrichtungen verwendet werden.

Es ist nun die Arbeitsweise der vorstehend erläuterten dosierenden Bruttopackwaage erläutert.

Bevor die Füllgutmenge in den am Füllstutzen 2 hängenden Sack 5 unter Verdichtung eindosiert wird, befindet sich die Waage in dem in Figur 2 gezeigten Zustand. Man erkennt, daß sich der Füllstutzen mit seinem Flansch 12 auf der Auflageplatte 10 abstützt und daß das Mitnehmerelement 20 nicht an dem Ringflansch 12 angreift, so daß das Taragewicht, das sich aus dem Füllstutzen 2 und dem daran hängenden Sack 5 zusammensetzt, über die Tragplatten 10 und die Tragstangen 9 die Wägezellen 7 voll belastet. Es wird nun das Füllgut durch den Einfüllbehälter 1 und den Füllstutzen 2 hindurch in den Sack 5 eingefüllt. Diese Eindosierung erfolgt in üblicher Weise mit einer Grobstrom- und sich daran anschließenden Feinstromregelung, die nicht Gegenstand der Erfindung sind, und in Abgleich mit dem Eichgewicht 15.

Wenn sich die gewünschte,zu verdichtende Füllgutmenge in dem Offensack 5 befindet, wird eine Verdichtung der Füllgutmenge vorgenommen. Die hierfür erforderliche Verdichtungseinrichtung 23 wird nun in üblicher Weise betätigt und bewegt den gefüllten Sack gemäß Pfeil 27 (Figur 1). Vor Beginn der Verdichtung wird der Antrieb 19 betätigt, so daß sich die Entkopplungsstange 18 nach oben bewegt und dadurch den Füllstutzen 2 an seinem Flansch 12 mittels des Mitnehmerelementes 20 anhebt, so daß nun die Auflageplatte 10 von dem Flansch 12 außer Eingriff gelangt, wodurch jede Wägezelle 7 vollständig entlastet ist, wie Figur 3 zeigt. Nunmehr kann der Verdichtungsvorgang erfolgen, ohne daß die durch die Verdichtungseinrichtung 23 auf den Füllstutzen 2 einwirkenden Belastungen auf die Wägezellen 7 übertragen werden, da diese vollständig vom Füllstutzen 2 entkoppelt sind.

Nach Beendigung des Verdichtungsvorganges wird der Sack 5 vom Füllstutzen 2 abgenommen und ein neuer Sack an den Füllstutzen angeklemmt. Hierbei kann nun in Verbindung mit der erwähnten, rechnergestützten Einrichtung überprüft werden, ob das eingestellte Taragewicht sich im zulässigen Toleranzbereich befindet und erforderlichenfalls nachgestellt werden muß. Zum Verständnis hierfür wird wieder auf die Figur 2 verwiesen, aus der ersichtlich ist, daß das Taragewicht (Füllstutzen 2 und Sack 5) von den Wägezellen 7 gemessen wird.

Bei dieser Gelegenheit kann aber auch der Urnullpunkt der Wärezellen 7 überprüft werden. Dies zeigt ein Blick auf die Figur 4. Es ist daraus ersichtlich, daß unter weiterer Betätigung der Antriebe 19 die Stangen 18 weiter nach oben bewegt werden, so daß nicht nur der Füllstutzen 2 weiter nach oben bewegt wird, sondern auch das Eichgewicht 15 mit nach oben bewegt wird, so daß die Wägezellen 7 ebenfalls von dem Eichgewicht 15 vollständig entlastet sind. Im gezeigten Fall gemäß Figur 5 wird dabei der Flansch 12 des Füllstutzens 2 soweit nach oben bewegt, daß sich der Auflagekörper 14, auf dem normalerweise das Eichgewicht 15 liegt, durch das Loch 13 des Flansches 12 nach unten hindurchbewegt hat. In dieser Stellung gemäß Figur 4 sind die Wägezellen 7 keiner Belastung mehr ausgesetzt, so daß ihr Nullpunkt in Verbindung mit der rechnergestützten Einrichtung zur Feststellung von insbesondere Gewichtsabweichungen festgestellt und erforderlichenfalls neu eingestellt werden kann.

Anschließend wird jeder Antrieb 19 wieder in umgekehrter Richtung betätigt, so daß sich der Füllstutzen 2 und ggf. auch das Eichgewicht 15 wieder absenken und in die Ausgangsstellung gemäß Figur 2 gelangen. Danach kann ein neuer Dosierabfüllvorgang mit anschließender Verdichtung stattfinden.

Es ist ersichtlich, daß mit der vorstehend beschriebenen Konstruktion einer dosierenden Bruttopackwaage auf einfache Weise die Wägezellen 7 während der Verdichtung des Füllgutes geschont werden und daß ebenfalls auf einfache und schnelle Weise jeweils immer eine Überprüfung der Nullpunkte und Übertragungsfaktoren stattfinden kann.

Die Bruttowaage kann auch so konzipiert sein, daß eine Verdichtungseinrichtung entfällt. Eine solche Waage ermöglicht dann durch die beschriebene Entkopplungskonstruktion eine schnelle und einfache Überprüfung ihrer Wägegenauigkeit.

## Patentansprüche

1. Bruttowaage vom waagebalkenfreien Typ für schüttfähiges oder fließfähiges Füllgut, mit einem Einfüllbehälter (1) für das mittels mehrerer, elektromagnetischer Wägezellen (7) abzuwiegende Füllgut, einem dem Einfüllbehälter (1) nachgeordneten Füllstutzen (2), an dem ein das Füllgut aufnehmendes Verpackungsmittel anklemmbar ist, und mit einer rechnergestützten Einrichtung zur Feststellung des Gewichtes insbesondere von Gewichtsabweichungen, dadurch gekennzeichnet, daß der Füllstutzen (2) als vom Einfüllbehälter (1) getrennte Baueinheit ausgebildet und mittels einer Gehängeeinrichtung (8) an den am Einfüllbehälter befestigten Wägezellen (7) lose aufgehängt ist, daß eine den Füllstutzen (2) von der Gehängeeinrichtung (8) außer Wirkungseingriff bringende Entkopplungseinrichtung (17) vorgesehen ist.

2. Bruttowaage nach Anspruch 1, dadurch gekennzeichnet, daß dem Füllstutzen (2) eine Verdichtungseinrichtung (23) für das abgepackte Füllgut nachgeordnet ist.

3. Bruttowaage nach Anspruch 1, dadurch gekennzeichnet, daß die Entkopplungseinrichtung (17) aus wenigstens zwei Einheiten aus je einer Entkopplungsstange (18) und einem die Entkopplungsstange auf- und abwärts bewegenden Antrieb (19) besteht, wobei jede Entkopplungsstange (18) an ihrem Unterende ein Mitnehmerelement (20) für den Füllstutzen (2) aufweist und wobei jeder den oberen Endbereich der Entkopplungsstange erfassende Antrieb (19) am Einfüllbehälter (1) montiert ist.

4. Bruttowaage nach Anspruch 1, dadurch gekennzeichnet, daß die Gehängeeinrichtung (8) aus mehreren, jeweils den Wägezellen (7) zugeordneten Gehängeeinheiten besteht und daß jede Gehängeeinheit eine mit ihrem Oberende an der zugehörigen Wägezelle (7) befestigten Tragstange (9) mit einem Tragkörper (10) an ihrem Unterende aufweist, auf dem sich der Füllstutzen (2) lose hängend abstützt.

5. Bruttowaage nach Anspruch 4, dadurch gekennzeichnet, daß die Tragstange (9) jeder Gehängeeinheit einen weiteren Tragkörper (14) zur losen Abstützung und Abhebung des ringförmigen Eichgewichtes (15) aufweist, wobei sich der weitere Tragkörper (14) mit Abstand oberhalb des ersten Tragkörpers (10) der Tragstange befindet.

6. Bruttowaage nach Anspruch 1, dadurch gekennzeichnet, daß sich an der Gehängeeinrichtung (8) oberhalb des Füllstutzens (2) zusätzlich ein der Füllgutmenge entsprechendes, vorzugsweise Ringform aufweisendes Eichgewicht (15) lose abstützt.

## Claims

1. A gross scale of the type without a balance beam, for filling material which is able to be poured or able to flow, with a filling container (1) for the filling material which is to be weighed by means of several electromagnetic weighing cells (7), with a filling connection (2) arranged after the filling container (1), against which connection a packing means, holding the filling material, is able to be clamped, and with a computer-supported device to establish the weight in particular of weight fluctuations, characterised in that the filling connection (2) is constructed as a separate structural unit from the filling container (1) and is loosely suspended by means of a suspension device (8) on the weighing cells (7) which are attached to the filling container, that an uncoupling device (17) is provided, bringing the filling connection (2) out of effective engagement from the suspension device (8).

2. A gross scale according to Claim 1, characterised in that a compressing device (23) for the unpacked filling material is arranged after the filling connection (2).

3. A gross scale according to Claim 1, characterised in that the uncoupling device (17) consists of at least two units of in each case an uncoupling rod (18) and a drive (19) moving the uncoupling rod upwards and downwards, in which each uncoupling rod (18) has at its lower end a carrier element (20) for the filling connection (2) and in which each drive (19) taking up the upper end region of the uncoupling rod is mounted on the filling container (1).

4. A gross scale according to Claim 1, characterised in that the suspension device (8) consists of several suspension units associated in each case with the weighing cells (7) and that each suspension unit has a support rod (9) attached by its upper end to the associated weighing cell (7) with a support element (10) at its lower end, on which the filling connection (2) rests in a loosely suspended manner.

5. A gross scale according to Claim 4, characterised in that the support rod (9) of each suspension unit has a further support element (14) for the loose support and lifting of the annular calibration weight (15), in which the further support element (14) is situated at a distance above the first support element (10) of the support rod.

6. A gross scale according to Claim 1, characterised in that in addition a calibration weight (15), preferably having an annular shape, corresponding to the amount of filling material, rests loosely against the suspension device (8) above the filling connection (2).

## Revendications

1. Balance de pesée brute du type sans fléau pour une matière de remplissage en vrac ou apte à s'écouler, comportant un récipient de remplissage (1) pour la matière de remplissage devant être pesée au moyen de plusieurs cellules électromagnétiques de pesée (7), une tubulure de remplissage (2) disposée en aval du récipient de remplissage (1) et à laquelle peut être fixé par serrage un moyen d'emballage recevant la matière de remplissage, et un dispositif assisté par ordinateur pour déterminer le poids, en particulier des écarts de poids, caractérisée en ce que la tubulure de remplissage (2) est réalisée sous la forme d'une unité de construction séparée du récipient de remplissage (1) et est suspendue de façon lâche, au moyen d'un dispositif de suspension (8), aux cellules de pesée (7) fixées sur le récipient de remplissage, et en ce qu'il est prévu un dispositif de désaccouplement (17) qui déconnecte la tubulure de remplissage (2) du dispositif de suspension (8).

2. Balance de pesée brute selon la revendication 1, caractérisée en ce qu'un dispositif de tassement (23) pour la matière de remplissage emballée est disposé en aval de la tubulure de remplissage (2).

3. Balance de pesée brute selon la revendication 1, caractérisée en ce que le dispositif de désaccouplement (17) est constitué par au moins deux unités formées, chacune par une tige de désaccouplement (18) et un dispositif d'entraînement (19) élevant et abaissant la tige de désaccouplement, chaque tige de désaccouplement (18) comportant, à son extrémité inférieure, un élément d'entraînement (20) pour la tubulure de remplissage (2), et chaque dispositif d'entraînement (19), qui saisit la partie d'extrémité supérieure de la tige de désaccouplement, étant monté sur le récipient de remplissage (1).

4. Balance de pesée brute selon la revendication 1, caractérisée en ce que le dispositif de suspension (8) est constitué par plusieurs unités de suspension associées respectivement aux cellules de pesée (7), et en ce que chaque unité de suspension comporte une tige de support (9) qui est fixée par son extrémité supérieure à la cellule de pesée associée (7) et qui comporte, à son extrémité inférieure, un corps de support (10), sur lequel prend appui, dans un état librement suspendu, la tubulure de remplissage (2).

5. Balance de pesée brute selon la revendication 4, caractérisée en ce que la tige de support (9) de chaque unité de suspension comporte un corps de support supplémentaire (14) servant à soutenir de façon lâche et à soulever le poids d'étalonnage annulaire (15), le corps de support supplémentaire (14) étant situé à distance au-dessus du premier corps de support (10) de la tige de support.

6. Balance de pesée brute selon la revendication 1, caractérisée en ce qu'en supplément un poids d'étalonnage (15), qui correspond à la quantité de matière de remplissage et présente, de préférence, une forme annulaire, prend appui de façon lâche sur le dispositif de suspension (8), au-dessus de la tubulure de remplissage (2).
